# EUROPÄISCHE PATENTSCHRIFT

(11) **EP 2 181 290 B1**
(45) Veröffentlichungstag und Bekanntmachung des Hinweises auf die Patenterteilung: **17.12.2014**
(21) Anmeldenummer: 08801527.6
(22) Anmeldetag: 07.08.2008
(51) Int. Cl.: F24C 15/04

(54) **HAUSHALTSGERÄTETÜR MIT EINER VORRICHTUNG ZUM VERBINDEN VON GLASSCHEIBEN**
DOOR FOR A DOMESTIC APPLIANCE WITH A DEVICE FOR CONNECTING THE GLASS PANES
PORTE D'APPAREIL MÉNAGER AVEC UN DISPOSITIF PERMETTANT D'ASSEMBLER DES VITRES

(30) Priorität: 27.08.2007 DE 102007040670
(43) Veröffentlichungstag der Anmeldung: 05.05.2010
(73) Patentinhaber: Miele & Cie. KG, 33332 Gütersloh (DE)
(72) Erfinder: BRONSTERING, Hermann, 59329 Wadersloh (DE)
(86) Internationale Anmeldenummer: PCT/EP2008/006479
(87) Internationale Veröffentlichungsnummer: WO 2009/027011

(56) Entgegenhaltungen:
- EP-A- 1 030 116
- DE-A1- 10 219 349
- DE-B3- 10 336 138

## Beschreibung

Die Erfindung betrifft eine Haushaltsgerätetür mit einer Vorrichtung zum Verbinden von Glasscheiben mit einem ersten Haltemittel und einem zweiten Haltemittel, wobei das erste Haltemittel zur Verbindung mit einer der äußeren Umgebung zugewandten äußeren Glasscheibe geeignet und eingerichtet ist, das zweite Haltemittel schwenkbar aus einer ersten Stellung in eine zweite Stellung und umgekehrt an dem ersten Haltmittel befestigt ist und das zweite Haltemittel Verriegelungselemente aufweist, die zum Halten einer der Innenseite des Gerätes zugewandten inneren Glasscheibe in der ersten Stellung des zweiten Haltemittels geeignet und eingerichtet sind.

Aus der Patentschrift mit der Veröffentlichungsnummer DE 103 36 138 B3, Fig. 8, Fig. 9 ist eine derartige Vorrichtung zum Verbinden von Glasscheiben bekannt. Das erste Haltemittel dieser Vorrichtung ist auf die äußere Glasscheibe aufgeklebt. Außerdem ist das erste Haltemittel mit einem an der Querseite der äußeren Glasscheibe verlaufenden Steg verbunden. Auf diesen Steg wird die innere Glasscheibe aufgelegt, die dann durch das Schwenken des zweiten Haltemittels zwischen dem zweiten Haltemittel und dem Steg geklemmt ist. Die äußere Glasscheibe und die innere Glasscheibe sind dann in der ersten Stellung des zweiten Haltemittels miteinander fest verbunden. Das erste Haltemittel ist bei montierter innerer Glasscheibe weitgehend frei zugänglich und überragt die scharnierseitige Kante der inneren Glasscheibe. Dadurch hinterlässt die Verbindungsvorrichtung einen wenig ansprechenden Eindruck und ist auch leicht verschmutzbar, da sie im Scharnierbereich der Backofentür in besonderem Maße einer Verschmutzungsgefahr ausgesetzt ist.

Das zweite Haltemittel kann mittels eines Werkzeugs, zum Beispiel eines Schraubendrehers aus der ersten Stellung in die zweite Stellung und umgekehrt gebracht werden. Dazu ist eine entsprechende Schlüsselfläche an dem zweiten Haltmittel vorgesehen, die ebenfalls leicht verschmutzbar ist.

Aus der DE 102 19 349 A1 ist eine Haushaltgerätetür mit einer der Innenseite des Gerätes zugewandten inneren Glasscheibe, einer der äußeren Umgebung zugewandten äußeren Glasscheibe und einer zwischen innerer und äußerer Glasscheibe angeordneten weiteren Glasscheibe, die sich auf einer Haltevorrichtung abstützt. Die weitere Glasscheibe ist mittels einer Verriegelungseinrichtung arretierbar. Die Verriegelungseinrichtung weist ein Verriegelungselement auf, das in einer ersten Position die weitere Glasscheibe formschlüssig fixiert und in einer zweiten Position der Verriegelungseinrichtung die weitere Glasscheibe freigibt. Die Verriegelungseinrichtung ist für die Verriegelung der weiteren Glasscheibe geeignet und ausgebildet. Eine Befestigung bzw. Verriegelung der inneren Glasscheibe ist mit dieser Ausführung nicht möglich.

Hier setzt die vorliegende Erfindung an.

Der vorliegenden Erfindung liegt die Aufgabe zugrunde, eine Verbindungsvorrichtung zum Verbinden von Glasscheiben einer Haushaltsgerätetür so fortzubilden, dass erstens ein formschöner Eindruck erzielt und zweitens eine Verschmutzung der Verbindungsvorrichtung vermieden wird.

Diese Aufgabe wird erfindungsgemäß dadurch gelöst, dass das zweite Haltemittel an dem der äußeren Glasscheibe zugewandten Verriegelungselement ein Betätigungselement aufweist, das geeignet und eingerichtet ist, als Handhabe zum Schwenken des zweiten Haltemittels aus der ersten Stellung in die zweite Stellung und umgekehrt zu dienen, wobei das Verriegelungselement in der ersten Stellung die innere Glasscheibe untergreift und die in die erste Einlegestruktur eingelegte und durch die Verriegelungselemente in dieser Stellung gehaltene innere Glasscheibe das Betätigungsmittel vollständig oder zumindest überwiegend überdeckt.

Mit der Handhabe ist es möglich, das zweite Haltemittel ohne Werkzeugeinsatz aus der ersten Stellung in die zweite Stellung und umgekehrt zu überführen. Außerdem ist das Betätigungsmittel durch die Überdeckung weitgehend vor Verschmutzungen geschützt.

Die erste Einlegestruktur kann so ausgestaltet sein, dass die in die erste Einlegestruktur eingelegte innere Glasscheibe das erste Haltemittel vollständig oder zumindest überwiegend überdeckt.

Die erste Einlegestruktur kann gemäß der Erfindung so ausgestaltet sein, dass die in die erste Einlegestruktur eingelegte innere Glasscheibe das erste Haltemittel seitlich überragt oder seitlich bündig mit dem ersten Haltemittel abschließt. Das erste Haltemittel ist dadurch für einen Betrachter weitgehend unsichtbar.

Das erste Haltemittel einer erfindungsgemäßen Verbindungsvorrichtung kann eine erste Fläche haben, die geeignet und eingerichtet ist, im montierten Zustand an der äußeren Glasscheibe anzuliegen.

Das erste Haltemittel einer erfindungsgemäßen Verbindungsvorrichtung kann eine oder mehrere Einlegestrukturen aufweisen, die geeignet und eingerichtet sind, je eine weitere Glasscheibe aufzunehmen. Die weiteren Einlegestrukturen sind dann vorzugsweise zwischen der ersten Fläche, welche zur Anlage des ersten Haltemittels an der äußeren Glasscheibe vorgesehen ist, und der ersten Einlegestruktur für die innere Glasscheibe angeordnet.

Die erste Einlegestruktur beziehungsweise alle Einlegestrukturen sind vorzugsweise geeignet und eingerichtet, je eine Ecke der Glasscheibe beziehungsweise der Glasscheiben aufzunehmen.

Die erste Einlegestruktur für die innere Glasscheibe beziehungsweise die Einlegestrukturen für die weiteren Glasscheiben können Anlageflächen aufweisen, an welche die Ränder der Glasscheibe beziehungsweise der Glasscheiben anliegen können. Die erste Einlegestruktur weist dabei vorzugsweise eine einzige Anlagefläche auf. Diese einzige Anlagefläche steht in einem Winkel von 45° zu den Langseiten der in die erste Einlegestruktur einzulegenden ersten Glasscheibe, deren Ecke im Winkel von 45° abgeschnitten ist.

Die weiteren Einlegestrukturen weisen zumindest zwei Anlageflächen auf, die im rechten Winkel zueinander stehen und parallel zu den Langseiten der einzulegenden Glasscheiben verlaufen. Eine oder mehrere der weiteren Einlegestrukturen können auch eine dritte Anlagefläche aufweisen. Diese dritte Anlagefläche verläuft dann ebenso wie die Anlagefläche der ersten Einlegestruktur vorteilhaft in einem Winkel von ca. 45° zu den übrigen Anlageflächen der weiteren Einlegestrukturen. Durch eine derartige Ausbildung der Einlegestrukturen ist es möglich zu erreichen, dass jeweils nur eine der Glasscheiben in eine der Einlegestrukturen eingelegt werden kann. So wird verhindert, dass bei der Montage die Reihenfolge der Glasscheiben vertauscht wird.

Die erste Einlegestruktur beziehungsweise die weiteren Einlegestrukturen können zumindest eine Auflagefläche haben, auf welcher ein Abschnitt der Vorder- oder Rückseite der Glasscheibe aufliegt. Die Auflageflächen der verschiedenen Einlegestrukturen sind dabei so angeordnet, dass sie sich in einer senkrechten Projektion nicht überdecken. Damit sind an dem ersten Haltemittel keine Hinterschnitte notwendig, in welche die Glasscheiben eingeführt werden müssen. Die Auflageflächen liegen, wie man leicht aus dem Zusammenhang folgern kann, in verschiedenen Ebenen.

Das erste Haltemittel einer erfindungsgemäßen Verbindungsvorrichtung kann eine Lagerbuchse aufweisen. Das zweite Haltemittel weist vorzugsweise einen Lagerzapfen auf und das zweite Haltemittel ist mit seinem Lagerzapfen vorteilhaft in der Lagerbuchse des ersten Haltemittels eingesetzt.

Gemäß der Erfindung kann das zweite Haltemittel ein oder mehrere erste Verriegelungselemente aufweisen, welche geeignet und eingerichtet sind, eine in die erste Einlegestruktur eingelegte Glasscheibe in der ersten Stellung das zweite Haltemittel zu verriegeln. Das zweite Haltemittel kann ferner weitere Verriegelungselemente aufweisen, welche geeignet und eingerichtet sind, eine in die weiteren Einlegestrukturen eingelegte Glasscheibe in der ersten Stellung des zweiten Haltemittels zu verriegeln. Die Verriegelungselemente sind vorteilhaft geeignet und eingerichtet, in die Einlegestrukturen eingelegte Glasscheiben in der ersten Stellung des zweiten Haltmittels zu übergreifen oder zu untergreifen.

Die weiteren Verriegelungselemente können geeignet und eingerichtet sein, in die Einlegestrukturen eingelegte Glasscheiben in der ersten Stellung an die Auflageflächen zu drücken. Damit ist eine spielfreie Lagerung der weiteren Glasscheiben in der Verbindungsvorrichtung möglich.

Die ersten Verriegelungselemente und die weiteren Verriegelungselemente können in einem Winkel von 135° zueinander stehen. Die ersten Verriegelungselemente können mit einem Steg verbunden sein und die so gebildete Struktur kann den Rand der inneren Glasscheibe umgreifen.

An dem ersten Haltemittel und an dem zweiten Haltemittel können Raststrukturen vorgesehen sein, um das zweite Haltemittel in der ersten Stellung zu fixieren, so dass die Verbindung zwischen den Glasscheiben nicht unabsichtlich oder zufällig während des Betriebs des Backofens gelöst werden kann.

Ein Ausführungsbeispiel für eine erfindungsgemäße Verbindungsvorrichtung und eine Haushaltsgerätetür mit einer erfindungsgemäßen Verbindungsvorrichtung ist anhand der Zeichnungen näher beschrieben. Es zeigt:
- Fig. 1: eine perspektivische Darstellung eines Teils eines als Backofen ausgebildeten Haushaltsgeräts,

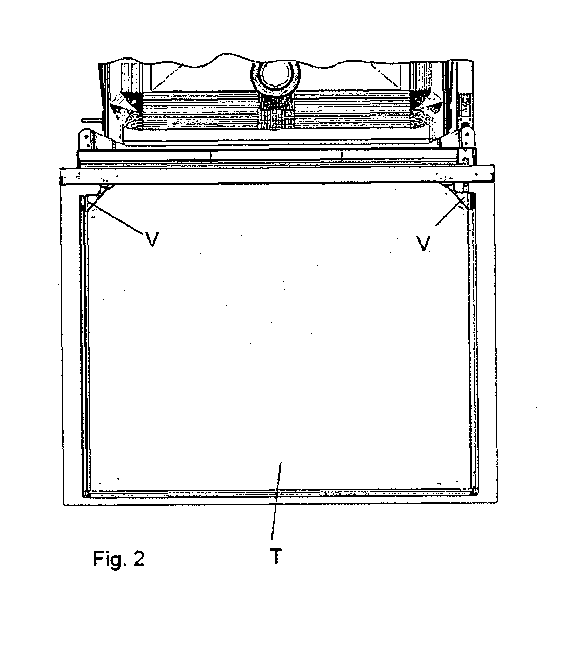

- Fig. 2: eine Draufsicht auf den Backofen bei geöffneter Backofentür,

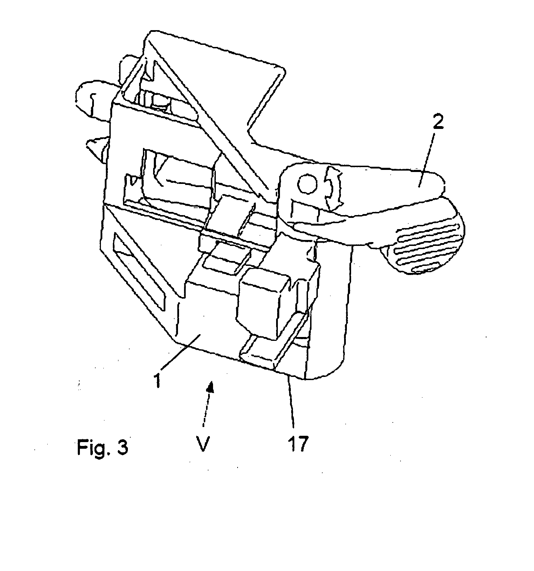

- Fig. 3: eine perspektivische Darstellung der erfindungsgemäßen Verbindungsvorrichtung,

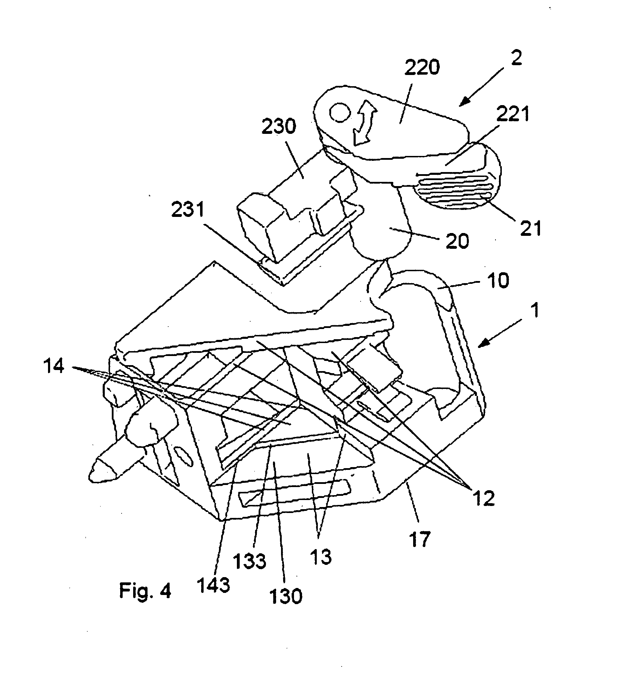

- Fig. 4: eine erste perspektivische Explosionsdarstellung der Verbindungsvorrichtung,

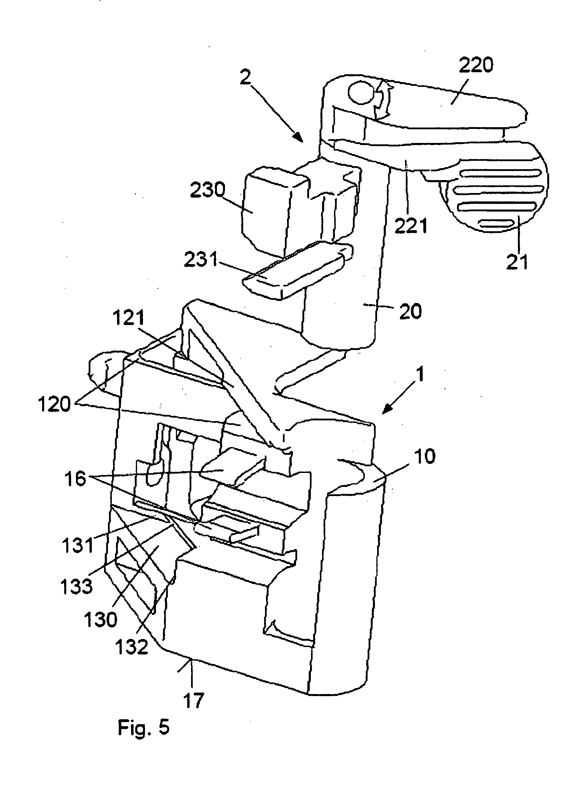

- Fig. 5: eine zweite perspektivische Explosionsdarstellung der Verbindungsvorrichtung,

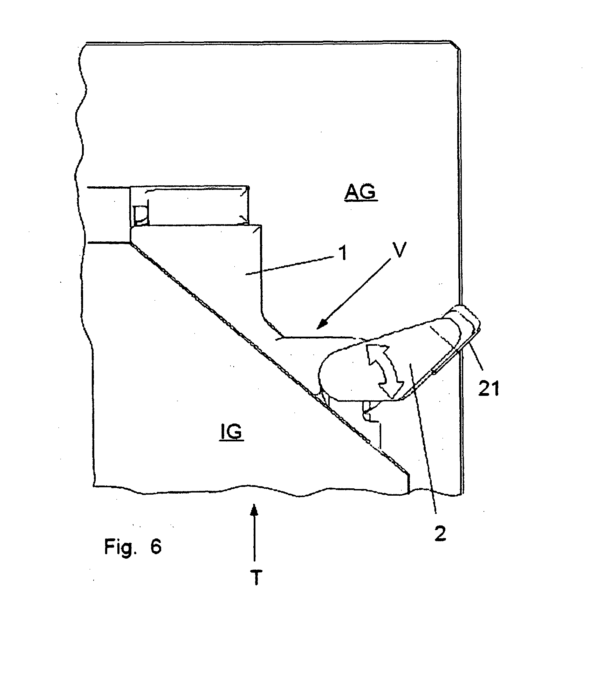

- Fig. 6: einen Teil einer Backofentür mit erfindungsgemäßer Verbindungsvorrichtung in einer zweiten Stellung,

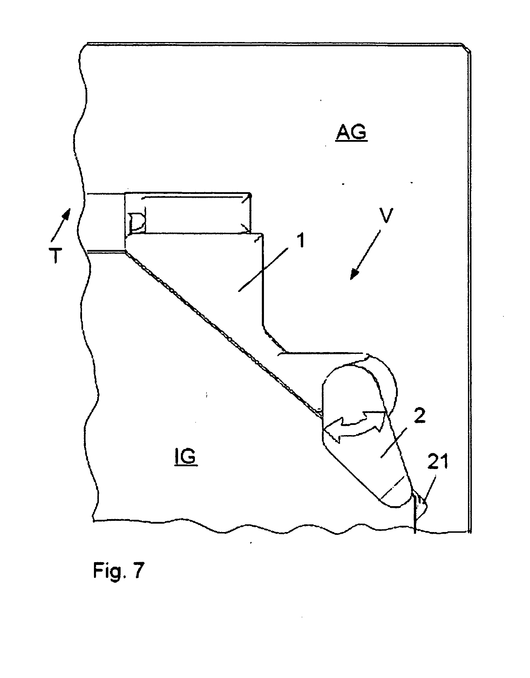

- Fig. 7: den Teil der Backofentür gemäß Fig. 6 mit der Verbindungsvorrichtung in einer ersten Stellung,
- Fig. 8: eine perspektivische Darstellung eines Teils der Backofentür mit der erfindungsgemäßen Verbindungsvorrichtung, einer äußeren Glasscheibe und einer ersten weiteren Glasscheibe,
- Fig. 9: eine Ansicht entsprechend Fig. 8 jedoch mit einer äußeren, einer ersten und einer zweiten weiteren Glasscheibe,

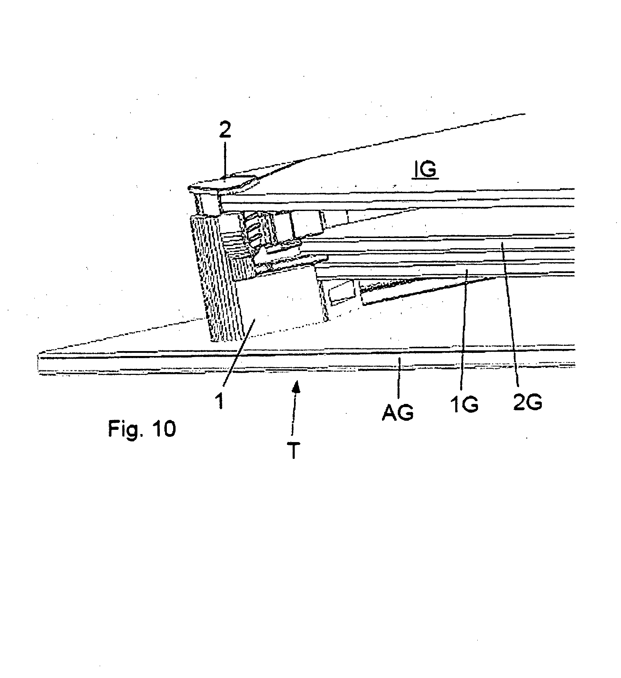

- Fig. 10: eine Darstellung entsprechend den Fig. 8 und 9 mit einer ersten und zweiten weiteren Glasscheibe sowie einer äußeren und einer inneren Glasscheibe und

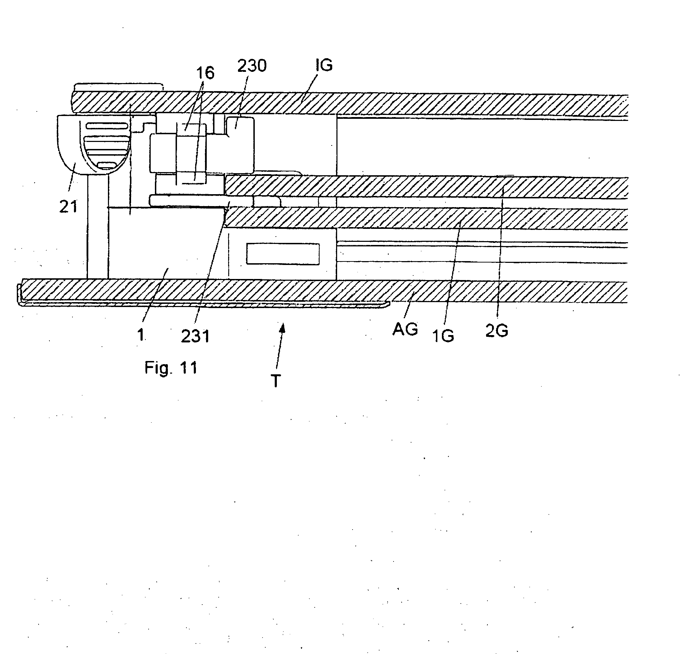

- Fig. 11: eine Ansicht der Backofentür von der Scharnierseite zum Teil im Schnitt.

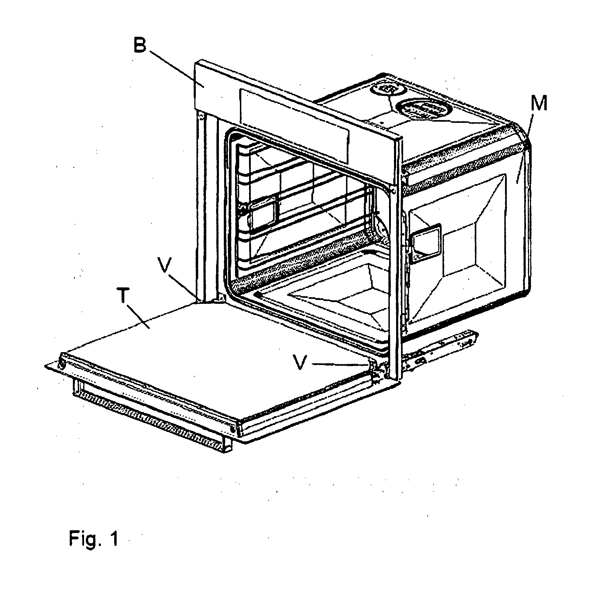

Der in Fig. 1 dargestellte Teil eines als Backofen ausgebildeten Haushaltsgeräts umfasst eine Backofenmuffel M, einen frontseitig an der Backofenmuffel M angebrachten Blendrahmen B und eine mit dem Blendrahmen B beziehungsweise nicht dargestellten Teilen des Backofens verbundene Backofentür T. Die Backofentür T ist aus mehreren Glasscheiben AG, 1G, 2G, IG aufgebaut, die unter anderem über zwei Verbindungsvorrichtung V miteinander verbunden sind. Die Verbindungsvorrichtung V sind in den unteren oder scharnierseitigen unteren Ecken der Backofentür T vorgesehen.

Die einzelne Verbindungsvorrichtung V ist zweiteilig aufgebaut und weist ein erstes Haltemittel 1 und ein zweites Haltemittel 2 auf. Das erste Haltemittel 1 weist eine erste Fläche 17 auf, mit der es auf der Innenseite der äußeren Glasscheibe AG aufgeklebt ist. Alternativ zum Aufkleben kann auch eine andere geeignete Verbindungsart gewählt werden.

An dem ersten Haltemittel 1 sind Einlegestrukturen 12, 13, 14 vorgesehen. In diese Einlegestrukturen 12, 13, 14 können die weiteren Glasscheiben 1G, 2G, IG der Backofentür T eingelegt werden. Mittels des zweiten Haltemittels 2 ist ein Verriegeln dieser Glasscheiben 1G, 2G, IG in den Einlegestrukturen 12, 13, 14 möglich. Dazu kann das zweite Haltemittel 2 in eine erste Stellung gebracht werden. In einer zweiten Stellung des zweiten Haltemittels 2 können die Glasscheiben 1G, 2G, IG aus den Einlegestrukturen 12, 13, 14 herausgenommen und von der äußeren Glasscheibe AG getrennt werden.

Erste Einlegestrukturen 12 sind für das Einlegen der inneren Glasscheibe IG vorgesehen. Die Einlegestrukturen umfassen Auflegflächen 120, die parallel zu der ersten Fläche 17 liegen und im Fall der montierten inneren Glasscheibe IG parallel zu der äußeren Glasscheibe AG liegen. Im montierten Fall liegt die innere Glasscheibe IG mit ihrer der äußeren Glasscheibe AG zugewandten Fläche auf den Auflageflächen 120 auf.

Die erste Einlegestruktur 12 umfasst ferner einer erste Anlagefläche 121, welche eine Bewegung der inneren Glasscheibe IG in der Ebene der inneren Glasscheibe IG begrenzt.

Auch die Einlegestruktur 13 für die erste weitere Glasscheibe 1G umfasst eine Auflagefläche 130, mit welcher die erste weitere Glasscheibe 1G im montierten Falle mit ihrer der äußeren Glasscheibe AG zugewandten Seite auf dem ersten Haltemittel 1 aufliegt. Zur Begrenzung der Bewegung in der Ebene der aufgelegten ersten weiteren Glasscheibe 1G sind zwei zur Auflagefläche 130 senkrecht stehende Anlageflächen 131, 132 vorgesehen. Die Anlageflächen 131, 132 sind miteinander über eine Anlagefläche 133 derart verbunden, dass eine trapezförmige Einlegestruktur 13 gebildet wird.

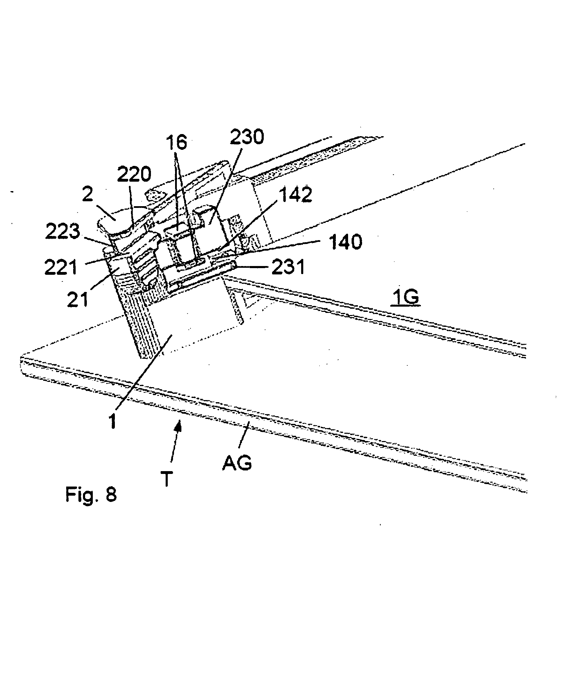

Auch für die zweite weitere Glasscheibe 2G ist eine Einlegestruktur 14 (Fig. 8) vorgesehen. Auch die Einlegestruktur 14 für die zweite weitere Glasscheibe 2G umfasst eine Auflagefläche 140 und Anlageflächen 142, 143, auf denen die zweite weitere Glasscheibe 2G aufliegt beziehungsweise durch die die Bewegung in der Ebene der aufgelegten zweiten weiteren Glasscheibe 2G begrenzt wird.

Die Anlageflächen 131, 132 und 142, 143 schließen insgesamt einen Winkel von 90° ein.

Die Anlageflächen 131, 132, 142, 143 sind auf zwei rechtwinklig zueinander angeordneten und senkrecht stehenden Projektionsebenen angeordnet, die jeweils mit der Projektionsebene der Anlageflächen 121 bzw. 133 einen Winkel von 45° bilden.

Das erste Haltemittel 1 weist eine Lagerbuchse 10 auf, in welcher das zweite Haltemittel 2 mit einem Lagerzapfen 20 gelagert ist. An dem Lagerzapfen 20 sind in etwa rechtwinklig zur Drehachse des Lagerzapfens 20 Verriegelungselemente 220, 221, 230, 231 vorgesehen. Die ersten Verriegelungselemente 220, 221 der Verriegelungselemente 220, 221, 230, 231 dienen dabei der Verriegelung der inneren Glasscheibe IG. Die ersten Verriegelungselemente 220, 221 über- beziehungsweise untergreifen zum Verriegeln der inneren Glasscheibe IG in der ersten Stellung den Rand dieser inneren Glasscheibe IG. Dadurch ist die innere Glasscheibe IG in der ersten Einlegestruktur 12 gehalten. Die ersten Verriegelungselemente 220, 221 sind über einen Steg 223 miteinander verbunden.

An dem unteren, d. h. dem der äußeren Glasscheibe AG zugewandten Verriegelungselement 221 ist eine Handhabe 21 zur Betätigung des zweiten Haltemittels 2 angebracht, mit welchem das zweite Haltemittel 2 aus der ersten Stellung in die zweite Stellung und umgekehrt überführt werden kann.

Eines der weiteren Verriegelungselemente, nämlich das Verriegelungselement 231 ist zur Verriegelung der ersten weiteren Glasscheibe 1G in der zugeordneten Einlegestruktur 13 geeignet und eingerichtet. In der ersten Stellung des zweiten Haltemittels 2 liegt das Ende des Verriegelungselementes 231 auf der der äußeren Glasscheibe AG abgewandten Seite der ersten weiteren Glasscheibe 1 G auf. Die Glasscheibe 1G ist somit zwischen dem Verriegelungselement 231 und der Auflagefläche 130 der zugeordneten Einlegestruktur 13 gehalten.

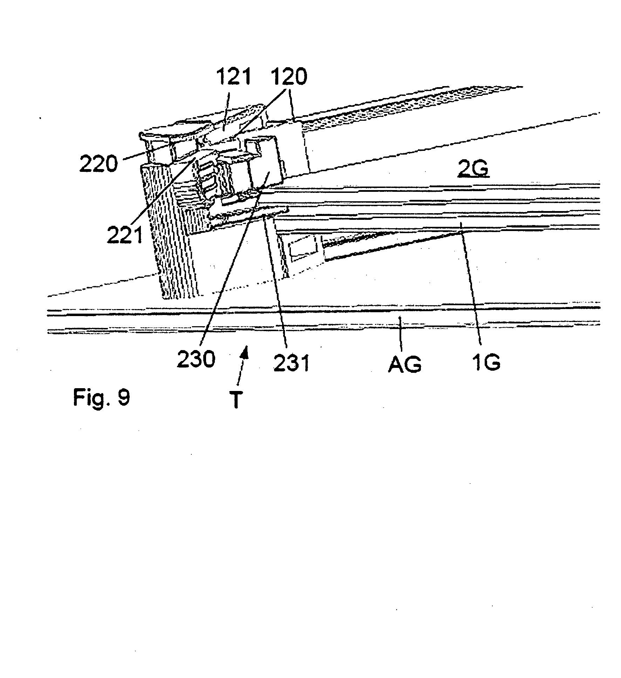

Zur Verriegelung der zweiten weiteren Glasscheibe 2G ist das Verriegelungselement 230 vorgesehen, welches in der ersten Stellung des zweiten Haltemittels 2 die zweite weitere Glasscheibe 2G übergreift (Fig. 9).

An dem ersten Haltemittel 1 sind zwei Rastarme 16 angebracht, die in der ersten Stellung des zweiten Haltemittels 2 das Verriegelungselement 230 an der Oberseite beziehungsweise der Unterseite übergreifen und mittels Rastnasen das zweite Haltemittel 2 in der ersten Stellung fixieren.

In der ersten Stellung des zweiten Haltemittels 2 ist im montierten Zustand der Glasscheiben AG, 1G, 2G, IG das erste Haltemittel 1 weitgehend von der inneren Glasscheibe IG überdeckt. Lediglich ein Bereich des ersten Haltemittels 1, welcher die Anlagefläche 121 des ersten Haltemittels 1 bildet, ist von der inneren Glasscheibe IG nicht überdeckt. In jedem Fall sind jedoch die Einlegestrukturen 13, 14 für die erste weitere Glasscheibe 1G und die zweite weitere Glasscheibe 2G überdeckt und für den Benutzer nicht zugänglich. Dadurch ist auch die Möglichkeit für eine Verschmutzung dieser Bereiche vermindert. Vom zweiten Haltemittel 2 ist in der ersten Stellung des zweiten Haltemittels 2 bei montierten Glasscheiben AG, 1G, 2G, IG in einer senkrechten Draufsicht auf die Innenseite der Backofentür lediglich der Bereich des zweiten Haltemittels 2 zu erkennen, der das Verriegelungselement 220 bildet. Außerdem ist die Handhabe 21, mit welcher das zweite Haltemittel 1 aus der ersten Stellung in die zweite Stellung überführt werden kann, fast vollständig von der innern Glasscheibe IG überdeckt.

In der zweiten Stellung des zweiten Haltemittels 2 sind die Verriegelungselemente 220, 221, 230, 231 so geschwenkt, dass sie nicht mehr in Kontakt und in Eingriff mit den Glasscheiben 1G, 2G, IG stehen. Daher können diese Glasscheiben 1G, 2G, IG in der zweiten Stellung des zweiten Haltemittels 2 aus dem ersten Haltemittel 1 und insbesondere aus den Einlegestrukturen 12, 13, 14 des ersten Haltemittels 1 entnommen werden.

Insgesamt lässt sich durch die erfindungsgemäße Verbindungsvorrichtung V eine weitestgehende Überdeckung der Verbindungsvorrichtung V durch die innere Glasscheibe IG der Backofentür T erreichen. Dazu leistet insbesondere einen Beitrag, dass die Verriegelungselemente 230, 231, mit welchen die weiteren Glasscheiben 1G, 2G in ihren Einlegestrukturen 13, 14 gehalten werden, um ca. 135° versetzt zu den ersten Verriegelungselementen 220, 221 für die innere Glasscheibe IG an dem Lagerbolzen 20 angebracht sind und die innere Glasscheibe IG an ihren Ecken eine kurze Kante hat, die um 45° zu den Langseiten der inneren Glasscheibe IG geneigt ist.

## Patentansprüche

1. Haushaltsgerätetür mit einer Vorrichtung (V) zum Verbinden von Glasscheiben (IG, AG, 1G, 2G) mit einem ersten Haltemittel (1) und einem zweiten Haltemittel (2), wobei
- das erste Haltemittel (1) zur Verbindung mit einer der äußeren Umgebung zugewandten äußeren Glasscheibe (AG) geeignet und eingerichtet ist,
- das zweite Haltemittel (2) schwenkbar aus einer ersten Stellung in eine zweite Stellung und umgekehrt an dem ersten Haltmittel (1) befestigt ist und
- das zweite Haltemittel (2) Verriegelungselemente (220, 221) aufweist, die zum Halten einer der Innenseite des Gerätes zugewandten inneren Glasscheibe (IG) in der ersten Stellung des zweiten Haltemittels (2) geeignet und eingerichtet sind, und
- das erste Haltemittel (1) eine erste Einlegestruktur (12) aufweist, welche zum Einlegen der inneren Glasscheibe (IG) geeignet und eingerichtet ist,
**dadurch gekennzeichnet, dass**
- dass das zweite Haltemittel (2) an dem der äußeren Glasscheibe zugewandten Verriegelungselement (221) ein Betätigungselement (21) aufweist, das geeignet und eingerichtet ist, als Handhabe zum Schwenken des zweiten Haltemittels (2) aus der ersten Stellung in die zweite Stellung und umgekehrt zu dienen, wobei das Verriegelungselement (221) in der ersten Stellung die innere Glasscheibe (IG) untergreift und die in die erste Einlegestruktur (12) eingelegte und durch die Verriegelungselemente (220, 221) in dieser Stellung gehaltene innere Glasscheibe (IG) das Betätigungsmittel (21) vollständig oder zumindest überwiegend überdeckt.

2. Haushaltsgerätetür nach Anspruch 1, **dadurch gekennzeichnet, dass** die erste Einlegestruktur (12) so ausgestaltet ist, dass die in die erste Einlegestruktur (12) eingelegte innere Glasscheibe (IG) das erste Haltemittel (1) vollständig oder zumindest überwiegend überdeckt.

3. Haushaltsgerätetür nach Anspruch 1 oder 2, **dadurch gekennzeichnet, dass** die erste Einlegestruktur (12) so ausgestaltet ist, dass die in die erste Einlegestruktur (12) eingelegte innere Glasscheibe (IG) das erste Haltemittel (1) seitlich überragt oder seitlich bündig mit dem ersten Haltemittel (1) abschließt.

4. Haushaltsgerätetür nach einem der Ansprüche 1 bis 3, **dadurch gekennzeichnet, dass** das erste Haltemittel (1) eine erste Fläche (17) hat, die geeignet und eingerichtet ist im montierten Zustand an der äußeren Glasscheibe (AG) anzuliegen.

5. Haushaltsgerätetür nach einem der Ansprüche 1 bis 4, **dadurch gekennzeichnet, dass** das erste Haltemittel (1) eine oder mehrere weitere Einlegestrukturen (13, 14) aufweist, die geeignet und eingerichtet sind je eine weitere Glasscheibe (1 G, 2G) aufzunehmen.

6. Haushaltsgerätetür nach Anspruch 4 oder 5, **dadurch gekennzeichnet, dass** die weiteren Einlegestrukturen (13, 14) zwischen der ersten Fläche (17) und der ersten Einlegestruktur (12) angeordnet sind.

7. Haushaltsgerätetür nach einem der Ansprüche 1 bis 6, **dadurch gekennzeichnet, dass** die erste Einlegestruktur (12) bzw. die Einlegstrukturen (12, 13, 14) geeignet und eingerichtet sind, je eine Ecke der Glasscheibe (IG) bzw. der weiteren Glasscheiben (1G, 2G) aufzunehmen.

8. Haushaltsgerätetür nach einem der Ansprüche 1 bis 7, **dadurch gekennzeichnet, dass** die erste Einlegestruktur (12) bzw. die Einlegestrukturen (12, 13, 14) eine Anlagefläche (121, 131, 132, 133, 142, 143) aufweisen, an welche Ränder der Glasscheibe (IG) bzw. der weiteren Glasscheiben (1 G, 2G) anliegen können.

9. Haushaltsgerätetür nach Anspruch 8, **dadurch gekennzeichnet, dass** die erste Einlegestruktur (12) eine einzige Anlagefläche (121) aufweist.

10. Haushaltsgerätetür nach Anspruch 8 und 9, **dadurch gekennzeichnet, dass** die weiteren Einlegestrukturen (13, 14) zumindest zwei Anlageflächen (131, 132, 142, 143) aufweisen, die im rechten Winkel zueinander stehen.

11. Haushaltsgerätetür nach Anspruch 10, **dadurch gekennzeichnet, dass** eine oder mehrere der weiteren Einlegestrukturen (13) je eine dritte Anlagefläche (133) aufweisen.

12. Haushaltsgerätetür nach Anspruch 11, **dadurch gekennzeichnet, dass** die Anlagefläche (121) der ersten Einlegestruktur (12) und die dritte Anlagefläche (133) in einem Winkel von ca. 45° zu den anderen Anlageflächen (131, 132, 142, 143) der weiteren Einlegestrukturen (13, 14) stehen.

13. Haushaltsgerätetür nach einem der Ansprüche 1 bis 12, **dadurch gekennzeichnet, dass** die erste Einlegestruktur (12) bzw. die Einlegestrukturen (13, 14) zumindest je eine Auflagefläche (120, 130, 140) hat bzw. haben, auf welcher ein Abschnitt der Vorder- oder Rückseite der Glasscheibe (1G, 2G, IG) aufliegt.

14. Haushaltsgerätetür nach Anspruch 13, **dadurch gekennzeichnet, dass** die Auflageflächen (120, 130, 140) in einer senkrechten Projektion einander nicht überdecken.

15. Haushaltsgerätetür nach Anspruch 13 oder 14, **dadurch gekennzeichnet, dass** die Auflageflächen (120, 130, 140) in verschiedenen Ebenen liegen.

16. Haushaltsgerätetür nach einem der Ansprüche 1 bis 14, **dadurch gekennzeichnet, dass** das erste Haltemittel (1) eine Lagerbuchse (10) aufweist.

17. Haushaltsgerätetür nach einem der Ansprüche 1 bis 15, **dadurch gekennzeichnet, dass** das zweite Haltemittel (2) einen Lagerzapfen (20) aufweist.

18. Haushaltsgerätetür nach Anspruch 16 oder 17, **dadurch gekennzeichnet, dass** das zweite Haltemittel (2) mit seinem Lagerzapfen (20) in die Lagerbuchse (10) des ersten Haltemittels (1) eingesetzt ist.

19. Haushaltsgerätetür nach einem der Ansprüche 1 bis 18, **dadurch gekennzeichnet, dass** das zweite Haltemittel (2) ein oder mehrere erste Verriegelungselemente (220,221) aufweist, welche geeignet und eingerichtet sind, eine in die erste Einlegestruktur (12) eingelegte Gasscheibe (IG) in der ersten Stellung des zweiten Haltemittels (2) zu verriegeln.

20. Haushaltsgerätetür nach einem der Ansprüche 1 bis 19, **dadurch gekennzeichnet, dass** das zweite Haltemittel (2) weitere Verriegelungselemente (230, 231) aufweist, welche geeignet und eingerichtet sind, eine in die weitere Einlegestruktur (13, 14) eingelegte Glasscheibe (1G, 2G) in der ersten Stellung des zweiten Haltemittels (2) zu verriegeln.

21. Haushaltsgerätetür nach Anspruch 19 oder 20, **dadurch gekennzeichnet, dass** die Verriegelungselemente (220, 221, 230, 231) geeignet und eingerichtet sind in die Einlegestrukturen (12, 13, 14) eingelegte Glasscheiben (IG, 1G, 2G) in der ersten Stellung des zweiten Haltemittels (2) zu über- oder zu untergreifen.

22. Haushaltsgerätetür nach einem der Ansprüche 19 bis 21, **dadurch gekennzeichnet, dass** zumindest die weiteren Verriegelungselemente (230, 231) geeignet und eingerichtet sind in die Einlegestrukturen (13, 14) eingelegte Glasscheiben (1 G, 2G) in der ersten Stellung des zweiten Haltemittels (2) an die Auflageflächen (130, 140) zu drücken.

23. Haushaltsgerätetür nach einem der Ansprüche 20 bis 22, **dadurch gekennzeichnet, dass** die ersten Verriegelungselemente (220, 221) und die weiteren Verriegelungselemente (230, 231) in einem Winkel von 135° zu einander stehen.

24. Haushaltsgerätetür nach einem der Ansprüche 1 bis 23, **dadurch gekennzeichnet, dass** an dem ersten Haltemittel (1) und an dem zweiten Haltemittel (2) Raststrukturen (16, 230) vorgesehen sind, um das zweite Haltemittel (2) in der ersten Stellung zu fixieren.

## Claims

1. Domestic appliance door, having a device (V) for connecting glass panes (IG, AG, 1G, 2G) to a first holding means (1) and a second holding means (2),
- the first holding means (1) being suitable and equipped for connecting to one of the external glass panes (AG) facing the external environment,
- the second holding means (2) being fastened to the first holding means (1) so as to be pivotable out of a first position into a second position, and vice versa,
- the second holding means (2) comprising locking elements (220, 221), which are suitable and equipped for holding one of the inner glass panes (IG) facing the interior of the appliance in the first position of the second holding means (2), and
- the first holding means (1) comprising a first insertion structure (12) which is suitable and equipped for inserting the inner glass pane (IG),
**characterised in that**
- the second holding means (2) comprises an actuating element (21) on the locking element (221) facing the external glass pane, which actuating element is suitable and equipped to serve as a handle for pivoting the second holding means (2) out of the first position into the second position, and vice versa, the locking element (221), in the first position, engaging under the inner glass pane (IG) and the inner glass pane (IG), which is inserted into the first insertion structure (12) and is held in this position by the locking elements (220, 221), covering the actuating means (21) completely or at least mostly.

2. Domestic appliance door according to claim 1, **characterised in that** the first insertion structure (12) is configured such that the inner glass pane (IG) inserted into the first insertion structure (12) covers the first holding means (1) completely or at least mostly.

3. Domestic appliance door according to either claim 1 or claim 2, **characterised in that** the first insertion structure (12) is configured such that the inner glass pane (IG) inserted into the first insertion structure (12) either projects laterally over the first holding means (1) or is laterally flush with the first holding means (1).

4. Domestic appliance door according to any of claims 1 to 3, **characterised in that** the first holding means has a first face (17) which is suitable and equipped for abutting the external glass pane (AG) when assembled.

5. Domestic appliance door according to any of claims 1 to 4, **characterised in that** the first holding means (1) comprises one or more additional insertion structures (13, 14), each of which is suitable and equipped for receiving an additional glass pane (1 G, 2G).

6. Domestic appliance door according to either claim 4 or claim 5, **characterised in that** the additional insertion structures (13, 14) are arranged between the first face (17) and the first insertion structure (12).

7. Domestic appliance door according to any of claims 1 to 6, **characterised in that** the first insertion structure (12) or the insertion structures (12, 13, 14) is/are each suitable and equipped for receiving a corner of the glass pane (IG) or of the additional glass panes (1 G, 2G).

8. Domestic appliance door according to any of claims 1 to 7, **characterised in that** the first insertion structure (12) or the insertion structures (12, 13, 14) comprise(s) a contact face (121, 131, 132, 133, 142, 143) with which edges of the glass pane (IG) or the additional glass panes (1 G, 2G) can come into contact.

9. Domestic appliance door according to claim 8, **characterised in that** the first insertion structure (12) comprises a single contact face (121).

10. Domestic appliance door according to claims 8 and 9, **characterised in that** the additional insertion structures (13, 14) comprise at least two contact faces (131, 132, 142, 143) which are perpendicular to one another.

11. Domestic appliance door according to claim 10, **characterised in that** each of the one or more additional insertion structures (13) comprises a third contact face (133).

12. Domestic appliance door according to claim 11, **characterised in that** the contact face (121) of the first insertion structure (12) and the third contact face (133) are at an angle of approximately 45° to the other contact faces (131, 132, 142, 143) of the additional insertion structures (13, 14).

13. Domestic appliance door according to any of claims 1 to 12, **characterised in that** the first insertion structure (12) or the insertion structures (13, 14) has/each have at least one contact face (120, 130, 140) on which a portion of the front- or rear side of the glass pane (1G, 2G, IG) lies.

14. Domestic appliance door according to claim 13, **characterised in that** the contact faces (120, 130, 140) do not overlap one another in a vertical projection.

15. Domestic appliance door according to either claim 13 or claim 14, **characterised in that** the contact faces (120, 130, 140) lie in different planes.

16. Domestic appliance door according to any of claims 1 to 14, **characterised in that** the first holding means (1) comprises a bearing bush (10).

17. Domestic appliance door according to any of claims 1 to 15, **characterised in that** the second holding means (2) comprises a bearing pin (20).

18. Domestic appliance door according to either claim 16 or claim 17, **characterised in that** the bearing pin (20) of the second holding means (2) is inserted into the bearing bush (10) of the first holding means (1).

19. Domestic appliance door according to any of claims 1 to 18, **characterised in that** the second holding means (2) comprises one or more first locking elements (220, 221) which are suitable and equipped for locking a glass pane (IG), inserted into the first insertion structure (12), in the first position of the second holding means (2).

20. Domestic appliance door according to any of claims 1 to 19, **characterised in that** the second holding means (2) comprises additional locking elements (230, 231) which are suitable and equipped for locking a glass pane (1G, 2G), inserted into the additional insertion structure (13, 14), in the first position of the second holding means (2).

21. Domestic appliance door according to either claim 19 or claim 20, **characterised in that** the locking elements (220, 221, 230, 231) are suitable and equipped for engaging over or under glass panes (IG, 1G, 2G), inserted into the insertion structures (12, 13, 14), in the first position of the second holding means (2).

22. Domestic appliance door according to any of claims 19 to 21, **characterised in that** at least the additional locking elements (230, 231) are suitable and equipped for pressing glass panes (1 G, 2G), inserted into the insertion structures (13, 14), against the contact faces (130, 140) in the first position of the second holding means (2).

23. Domestic appliance door according to any of claims 20 to 22, **characterised in that** the first locking elements (220, 221) and the additional locking elements (230, 231) are at an angle of 135° to one another.

24. Domestic appliance door according to any of claims 1 to 23, **characterised in that** latching structures (16, 230) are provided on the first holding means (1) and on the second holding means (2) in order to fix the second holding means (2) in the first position.

## Revendications

1. Porte d'appareil électroménager avec un dispositif (V) pour raccorder des vitres (IG, AG, 1G, 2G) à un premier moyen de retenue (1) et à un deuxième moyen de retenue (2),
- le premier moyen de retenue (1) étant approprié et agencé pour le raccordement à une vitre extérieure (AG) tournée vers l'environnement extérieur,
- le deuxième moyen de retenue (2) étant fixé sur le premier moyen de retenue (1) de façon à pouvoir pivoter à partir d'une première position vers une deuxième position et inversement, et
- le deuxième moyen de retenue (2) présentant des éléments de verrouillage (220, 221) qui sont appropriés et agencés pour la retenue, dans la première position du deuxième moyen de retenue (2), d'une vitre intérieure (IG) tournée vers le côté intérieur de l'appareil, et
- le premier moyen de retenue (1) présentant une structure d'insertion (12) qui est appropriée et agencée pour l'insertion de la vitre intérieure (IG),
**caractérisée en ce que**
- le deuxième moyen de retenue (2) présente, sur l'élément de verrouillage (221) tourné vers la vitre extérieure, un élément d'actionnement (21) qui est approprié et agencé pour servir de manette pour le pivotement du deuxième moyen de retenue (2) à partir de la première position vers la deuxième position et inversement, l'élément de verrouillage (221) agrippant par en dessous, dans la première position, la vitre intérieure (IG), et la vitre intérieure (IG), insérée dans la première structure d'insertion (12) et retenue dans cette position par les éléments de verrouillage (220, 221), recouvrant le moyen d'actionnement (21) complètement ou au moins de façon prédominante.

2. Porte d'appareil électroménager selon la revendication 1, **caractérisée en ce que** la première structure d'insertion (12) est constituée de telle sorte que la vitre intérieure (IG) insérée dans la première structure d'insertion (12) recouvre le premier moyen de retenue (1) complètement ou au moins de façon prédominante.

3. Porte d'appareil électroménager selon la revendication 1 ou 2, **caractérisée en ce que** la première structure d'insertion (12) est constituée de telle sorte que la vitre intérieure (IG) insérée dans la première structure d'insertion (12) dépasse latéralement le premier moyen de retenue (1) ou termine latéralement en affleurement avec le premier moyen de retenue (1).

4. Porte d'appareil électroménager selon une des revendications 1 à 3, **caractérisée en ce que** le premier moyen de retenue (1) a une première surface (17) qui est appropriée et agencée pour être, dans l'état monté, adjacente à la vitre extérieure (AG).

5. Porte d'appareil électroménager selon une des revendications 1 à 4, **caractérisée en ce que** le premier moyen de retenue (1) présente une ou plusieurs autres structures d'insertion (13, 14) qui sont appropriées et agencées pour recevoir chacune une autre vitre (1G, 2G).

6. Porte d'appareil électroménager selon la revendication 4 ou 5, **caractérisée en ce que** les autres structures d'insertion (13, 14) sont disposées entre la première surface (17) et la première structure d'insertion (12).

7. Porte d'appareil électroménager selon une des revendications 1 à 6, **caractérisée en ce que** la première structure d'insertion (12) ou respectivement les structures d'insertion (12, 13, 14) sont appropriées et agencées pour recevoir chacune un coin de la vitre (IG) ou respectivement des autres vitres (1 G, 2G).

8. Porte d'appareil électroménager selon une des revendications 1 à 7, **caractérisée en ce que** la première structure d'insertion (12) ou respectivement les structures d'insertion (12, 13, 14) présentent une surface d'appui (121, 131, 132, 133, 142, 143) sur laquelle peuvent s'appuyer des bords de la vitre (IG) ou respectivement des autres vitres (1 G, 2G).

9. Porte d'appareil électroménager selon la revendication 8, **caractérisée en ce que** la première structure d'insertion (12) présente une unique surface d'appui (121).

10. Porte d'appareil électroménager selon les revendications 8 et 9, **caractérisée en ce que** les autres structures d'insertion (13, 14) présentent au moins deux surfaces d'appui (131, 132, 142, 143) qui sont à angle droit l'une par rapport à l'autre.

11. Porte d'appareil électroménager selon la revendication 10, **caractérisée en ce qu'**une ou plusieurs des autres structures d'insertion (13) présentent chacune une troisième surface d'appui (133).

12. Porte d'appareil électroménager selon la revendication 11, **caractérisée en ce que** la surface d'appui (121) de la première structure d'insertion (12) et la troisième surface d'appui (133) forment un angle d'environ 45° avec les autres surfaces d'appui (131, 132, 142, 143) des autres structures d'insertion (13, 14).

13. Porte d'appareil électroménager selon une des revendications 1 à 12, **caractérisée en ce que** la première structure d'insertion (12) ou respectivement les structures d'insertion (13, 14) a ou respectivement ont au moins chacune une surface d'appui (120, 130, 140) sur laquelle repose un tronçon du côté avant ou du côté arrière de la vitre (1 G, 2G, IG).

14. Porte d'appareil électroménager selon la revendication 13, **caractérisée en ce que** les surfaces d'appui (120, 130, 140) ne se recouvrent pas mutuellement dans une projection verticale.

15. Porte d'appareil électroménager selon la revendication 13 ou 14, **caractérisée en ce que** les surfaces d'appui (120, 130, 140) sont situées dans différents plans.

16. Porte d'appareil électroménager selon une des revendications 1 à 14, **caractérisée en ce que** le premier moyen de retenue (1) présente un coussinet (10).

17. Porte d'appareil électroménager selon une des revendications 1 à 15, **caractérisée en ce que** le deuxième moyen de retenue (2) présente un tourillon (20).

18. Porte d'appareil électroménager selon la revendication 16 ou 17, **caractérisée en ce que** le deuxième moyen de retenue (2) est, avec son tourillon (20), inséré dans le coussinet (10) du premier moyen de retenue (1).

19. Porte d'appareil électroménager selon une des revendications 1 à 18, **caractérisée en ce que** le deuxième moyen de retenue (2) présente un ou plusieurs premiers éléments de verrouillage (220, 221) qui sont appropriés et agencés pour verrouiller, dans la première position du deuxième moyen de retenue (2), une vitre intérieure (IG) insérée dans la première structure d'insertion (12).

20. Porte d'appareil électroménager selon une des revendications 1 à 19, **caractérisée en ce que** le deuxième moyen de retenue (2) présente d'autres éléments de verrouillage (230, 231) qui sont appropriés et agencés pour verrouiller, dans la première position du deuxième moyen de retenue (2), une vitre (1 G, 2G) insérée dans l'autre structure d'insertion (13, 14).

21. Porte d'appareil électroménager selon la revendication 19 ou 20, **caractérisée en ce que** les éléments de verrouillage (220, 221, 230, 231) sont appropriés et agencés pour agripper par au-dessus ou par en dessous, dans la première position du deuxième moyen de retenue (2), des vitres (IG, 1G, 2G) insérées dans les structures d'insertion (12, 13, 14).

22. Porte d'appareil électroménager selon une des revendications 19 à 21, **caractérisée en ce qu'**au moins les autres éléments de verrouillage (230, 231) sont appropriés et agencés pour presser, dans la première position du deuxième moyen de retenue (2), sur les surfaces d'appui (130, 140) des vitres (1 G, 2G) insérées dans les structures d'insertion (13, 14).

23. Porte d'appareil électroménager selon une des revendications 20 à 22, **caractérisée en ce que** les premiers éléments de verrouillage (220, 221) et les autres éléments de verrouillage (230, 231) forment entre eux un angle de 135°.

24. Porte d'appareil électroménager selon une des revendications 1 à 23, **caractérisée en ce que**, sur le premier moyen de retenue (1) et sur le deuxième moyen de retenue (2), il est prévu des structures d'encliquetage (16, 230) pour fixer le deuxième moyen de retenue (2) dans la première position.
